# EUROPEAN PATENT SPECIFICATION

(11) **EP 4 257 413 B1**
(45) Date of publication and mention of the grant of the patent: **14.10.2026**
(21) Application number: 22166640.7
(22) Date of filing: 05.04.2022
(51) Int. Cl.: B60L 3/08, B60L 7/10, B62D 59/04, B60L 15/20, B60L 15/32

(54) **METHOD FOR CONTROLLING AN ELECTRIC DRIVE SYSTEM OF A TRAILER, DATA PROCESSING DEVICE, AND ELECTRIC DRIVE SYSTEM FOR A TRAILER**
VERFAHREN ZUM STEUERN EINES ELEKTRISCHEN ANTRIEBSSYSTEMS EINES ANHÄNGERS, DATENVERARBEITUNGSVORRICHTUNG UND ELEKTRISCHES ANTRIEBSSYSTEM FÜR EINEN ANHÄNGER
PROCÉDÉ DE COMMANDE D'UN SYSTÈME D'ENTRAÎNEMENT ÉLECTRIQUE D'UNE REMORQUE, DISPOSITIF DE TRAITEMENT DE DONNÉES ET SYSTÈME D'ENTRAÎNEMENT ÉLECTRIQUE POUR UNE REMORQUE

(43) Date of publication of application: 11.10.2023
(73) Proprietor: Volvo Car Corporation, 40531 Göteborg (SE)
(72) Inventor: ERIKSSON, Robert, 40531 Göteborg (SE)
(74) Representative: Kransell & Wennborg KB

(56) References cited:
- DE-A1- 102010 042 907
- DE-A1- 102019 205 156
- US-A1- 2010 065 344
- US-A1- 2015 053 435
- US-A1- 2020 269 706

## Description

The present disclosure relates to a method for controlling an electric drive system of a trailer.

Moreover, the present disclosure relates to a data processing device comprising means for carrying out such a method.

Furthermore, the present disclosure is directed to an electric drive system for a trailer.

Electric drive systems for trailers are used to at least partially compensate for the power that is needed for towing the trailer. Without such a compensation, the towing vehicle would suffer from a strongly reduced driving range. This is the case for both battery electric towing vehicles and towing vehicles being powered by an internal combustion engine. The reduced driving range leads to an increase in the necessary charging frequency or refueling frequency.

Electric drive systems for a trailer and corresponding methods are for example known from US 2020/269706 A1, US 2015/053435 A1, DE 10 2019 205156 A1,
DE 10 2010 042907 A1, and US 2010/065344 A1.

The power being necessary for towing a trailer is mainly dependent on a road load of the trailer and an aerodynamic drag of the towing vehicle together with the trailer, more precisely the aerodynamic drag added by the trailer.

It has to be noted that in the present disclosure electric drive systems for trailers relate to electric drive system which are permanently coupled with the corresponding wheels of the trailer. This means that electric drive system which are only temporarily coupled with the wheels of the trailer do not fall within the scope of the present disclosure. Electric drive systems which are only temporarily coupled to the wheels are mainly used for maneuvering a trailer, e.g. for backing the trailer into a narrow parking space. Such systems are often called maneuvering systems or simply movers. Such systems usually are not used while the trailer is towed by a towing vehicle.

The problem to be solved by the present disclosure is to further improve electric drive systems for trailers. In this context, an electric drive system shall be simple and reliable. At the same time the electric drive system shall provide an accurate compensation of the power needed for towing.

The problem is at least partially solved or alleviated by the subject matter of the independent claims of the present disclosure, wherein further examples are incorporated in the dependent claims.

According to a first aspect, there is provided a method for controlling an electric drive system of a trailer, wherein the electric drive system comprises at least one electric machine for driving at least one pair of wheels of the trailer, the method comprises:
- receiving a velocity information describing a travelling velocity of the trailer,
- determining a drive support power as a function of the received velocity information, and
- requesting the at least one electric machine to provide the determined drive support power to the at least one pair of wheels of the trailer.

Thus, more generally speaking, the electric drive system is controlled as a function of the velocity information. In the present context, the velocity information can be any information that directly or indirectly describes a speed over ground. Indirectly means that the speed over ground can be derived from the velocity information by performing mathematical operations thereon. Controlling the electric machine of the electric drive system as a function of the velocity information is comparatively simple. Moreover, such a control method is reliable since a velocity information may be provided in a reliable manner. At the same time, this kind of control is comparatively accurate since the mayor influences on the power needed for towing are functions of a velocity information.

The general idea underlying the method according to the present disclosure is that power needed for accelerating and decelerating the trailer shall be provided by the towing vehicle. In a case in which the towing vehicle is capable of recuperating energy, i.e. transforming kinetic energy of the towing vehicle and the trailer into electric energy being stored in a battery system, the effect of the power for accelerating and decelerating can be neglected for the control of the electric drive system of the trailer. In other words, there is no compensation provided for the kinetic energy and the corresponding power. Thus, only the power needed to overcome an aerodynamic drag and wheel friction needs to be compensated. Both the aerodynamic drag and the wheel friction are dependent on a traveling velocity of the trailer.

Additionally, determining a drive support power comprises using a model. The model describes a relation between the velocity information and a corresponding drive support power. Thus, the model is a representation of the physical, more precisely dynamic, properties of the trailer comprising the electric drive system. The model uses the velocity information as an input and generates a corresponding drive support power as an output. The model may for example be derived from test drives. Additionally or alternatively, the model may be derived from theoretical considerations e.g. relating to road load and the aerodynamics of the towing vehicle together with the trailer. In all cases, the model constitutes a reliable and accurate way for determining a drive support power.

Moreover, the model comprises a second order polynomial describing the drive support power as a function of the velocity information or a third order polynomial describing the drive support power as a function of the velocity information. An alternative term for a second order polynomial is a quadratic function. Thus, the drive support power depends on the velocity information as follows. In the following equation the velocity information is denoted VI and the drive support power is denoted SP. The letters a, b, c, d, e, f, and g are coefficients which will be explained in more detail further below. $SP = a ⋅ {VI}^{3} + b ⋅ {VI}^{2} + c ⋅ VI + d$ or $SP = e ⋅ {VI}^{2} + f ⋅ VI + g$ Such a model may be used for accurately determining a drive support power based on a velocity information. The model may be executed in a computationally efficient manner.

As mentioned above, the model may be derived from theoretical considerations. As has been mentioned before, the kinetic energy and corresponding power for accelerating and decelerating the trailer are not used for the calculation of the drive support power. The drive support power can be described as a function of the sum of resistance forces F acting on the trailer and the trailer velocity, i.e. the velocity information. Again, the drive support power is denoted SP and the velocity information is denoted VI. $SP = F ⋅ VI$ The sum of resistance forces F is calculated as the sum of an aerodynamic drag force FA and a wheel friction force FF $F = FA + FF$ The aerodynamic drag force FA can be calculated as follows, wherein A is the frontal surface added by the trailer, C is the drag coefficient of the trailer and ρ is the density of air. $FA = 0 , 5 ⋅ C ⋅ ρ ⋅ A ⋅ {\left(VI\right)}^{2}$ The wheel friction force FF can be calculated as follows. A trailer weight is noted m. the gravitation constant is denoted g and a wheel friction constant is denoted µ. Again, VI is the velocity information. $FF = m ⋅ g ⋅ μ ⋅ VI$ Altogether, the drive support power can be calculated as follows: $SP = \left(FA+FF\right) ⋅ VI$ $SP = \left(0,5⋅C⋅ρ⋅A\right) ⋅ {\left(VI\right)}^{3} + \left(m⋅g⋅μ\right) ⋅ {\left(VI\right)}^{2}$ It is noted that the drag coefficient C, the frontal surface A, the mass m and the wheel friction constant µ are specific for each trailer. In the above formula, the term (0,5 · *C · p · A*) may be identified with coefficient a and the term (*m · g* · *µ*) may be identified with coefficient b. in the above example, coefficients c and d war zero.

It is noted that the above equations and calculations are theoretical. This means that they may only reflect the reality to a certain extend. This is mainly due to the fact that the environment in which a trailer is operated is not static. For example, the frontal surface A may change due to changing wind directions. Also the wheel friction constant µ may change depending on road conditions. Moreover, the mass of the trailer is not constant since in different use cases objects of different weight may be loaded into the trailer. However, the above polynomial expressions are of course a good approximation of reality.

Optionally, an order reduction technique may be applied to the above third order polynomial for generating a second order polynomial.

In the above polynomial expressions, the coefficients being specific for each trailer may be determined by simulations or experiments. Alternatively, such coefficients may be deducted from literature. Also the coefficients describing the environment may be taken from literature.

The method further comprises receiving a towing resistance information and calibrating the model based on the towing resistance information. Again, the towing resistance information may be provided by a towing hook sensor as has already been explained above. In situations in which the provided towing resistance corresponds to a desired towing resistance, the drive support power and the velocity information may be saved. This may be repeated several times such that multiple pairs of real drive support powers and corresponding velocity information which lead to a desired towing resistance are known. These pairs can be used for determining the coefficients of the above-described models, i.e. for calibrating the models. To this end, curve fit techniques may be used. Consequently, the models may be calibrated to real driving situations. Thus, the electric drive system may be controlled with high accuracy.

In an example, the velocity information is a rotational speed information describing a rotational speed of at least one wheel of the trailer. Such a rotational speed information is easily available, e.g. by a rotational speed sensor which can be installed on the trailer. The rotational speed information can be easily transformed into a speed over ground information. Thus, the drive support power may be provided in a simple and accurate manner.

In an example, the velocity information is a time series of location information, wherein the location information describes a location of the trailer. The location information may be provided by a GPS sensor. Such a sensor is simple and reliable at the same time. Based on the time series of location information, the velocity information can be provided with high reliability and at low cost. This may be done by calculating a temporal differential of the location information. Also in this case, the drive support power may be provided in a simple and accurate manner.

In an example, the determined drive support power is zero if the received velocity information describes a travelling velocity of the trailer being smaller than a defined lower velocity threshold. In other words, the electric drive system does not provide any drive support power if the trailer travels at a speed being inferior to the lower velocity threshold. This is done in order to guarantee that the trailer only moves in a case in which it is effectively and intentionally towed by a towing vehicle. Thus, the effective travelling speed and the effective travelling direction of the trailer are always imposed by the towing vehicle. Consequently, the electric drive system may be controlled in a safe manner.

In an example, the determined drive support power is zero if the received velocity information describes a travelling velocity of the trailer exceeding a defined upper velocity threshold. In other words, the travelling of the trailer is only supported up to a pre-defined speed limit. In this context, the upper velocity threshold may be set to correspond to a legal speed limit for vehicles towing trailers. This enhances road safety. Moreover, this has a positive effect on the energy consumption of the electric drive system of the trailer, i.e. by providing an upper velocity threshold, the energy efficiency is enhanced.

In an example, determining the drive support power comprises using a look-up table. Such a look-up table comprises a set of velocity values or velocity ranges. Drive support power values are attributed to each velocity value or velocity range. This is a very simple and reliable way to provide a drive support power as a function of the received velocity information.

In an example, the method comprises
- providing a set of different models,
- selecting one out of the set of different models, and
- determining the drive support power using the selected model.

The models of the set of different models may for example all comprise a second order polynomial or a third order polynomial describing the drive support power as a function of the velocity information as described above. In this case, the models of the set of different models differ in that they comprise different coefficients a, b, c, d, e, f, g. The different models may for example represent different environmental conditions such as weather conditions or different use cases of the trailer. It is reminded, that at least to a certain extent, the model needs to be adapted to a specific trailer and/or towing vehicle. Thus, the set of models can also comprise models for different trailers and/or towing vehicles. The accuracy of the control may be enhanced by selecting the most appropriate model.

In an example, the method may further comprise receiving a selection information and selecting the model corresponding to the selection information. Again, a set of different models is provided. A user of the trailer may select the model which is most appropriate in his or her opinion. To this end, the models of the set of models may be provided for different sizes of towing vehicles, e.g. small towing vehicle, mid-sized towing vehicle or big towing vehicle. Thus, the models reflect the fact that that the aerodynamics of a combination of a vehicle and a trailer are strongly influenced by the frontal area added by the trailer.

In an example, the method may further comprise receiving a towing resistance information and selecting the one out of the set of different models based on the towing resistance information. The towing resistance information may for example be provided by a towing hook sensor, i.e. a sensor located in the region of the towing hook and measuring a towing force. The towing force may be provided over time or over travel distance. In both cases, this offers a possibility to accurately select the most appropriate model. In this context, a towing force shall be small and positive, i.e. the towing vehicle shall effectively tow the trailer but with a minimum amount of force. This is a simple and reliable manner for automatically selecting an appropriate model.

In this context, it is possible that a test sequence is performed where different models are used for determining the drive support power and the corresponding towing forces are measured. Based thereon, the most appropriate model may be selected.

The method may be at least partly computer-implemented, and may be implemented in software or in hardware, or in software and hardware. Further, the method may be carried out by computer program instructions running on means that provide data processing functions, i.e. on a data processing means. The data processing means may be a suitable computing means, such as an electronic control module etc., which may also be a distributed computer system. The data processing means or the computer, respectively, may comprise one or more of a processor, a memory, a data interface, or the like. The data processing means may be configured for carrying out the method according to the present disclosure.

According to a second aspect, there is provided a data processing device comprising means for carrying out the method according to the present disclosure. Thus, the data processing device is configured for controlling the electric drive system as a function of the velocity information. More precisely, the electric machine of the electric drive system is controlled. Such a data processing devices operates in a highly reliable manner. At the same time, the control performed by the data processing device is comparatively accurate since the mayor influences on the power needed for towing are functions of a velocity information.

According to third aspect, there is provided an electric drive system for a trailer. The electric drive system comprises at least one electric machine for driving at least one pair of wheels of the trailer, and a data processing device according to the present disclosure. The data processing device is communicatively coupled to the at least one electric machine such that the data processing device can request the at least one electric machine to provide a drive support power to the at least one pair of wheels of the trailer. Thus, the electric machine may provide a drive support power which is adequate for a current drive situation. This means that the power needed for towing the trailer is accurately compensated. Consequently, towing the trailer only has a minor influence on the driving range of the towing vehicle.

In an example, the electric drive system may comprise an electric energy storage unit. The electric energy storage unit is configured for storing electric energy. It may also be called a battery unit. The electric energy storage unit is electrically connected to the electric machine such that the electric energy necessary for operating the electric machine is provided by the electric energy storage unit.

In an example, the electric drive system may be configured for energy recuperation. Thus, the electric machine may be operated as an electric generator feeding electric energy into the electric energy storage unit.

In another example, the electric drive system is not configured for energy recuperation. If a trailer having such an electric drive system is towed by a battery electric vehicle being configured for energy recuperation, the kinetic energy of the trailer may be recuperated by the vehicle. In such a configuration, the electric drive system of the trailer is structurally comparatively simple.

In an example, the electric drive system may comprise a rotational speed sensor being configured for detecting a rotational speed of at least one wheel of the trailer. Alternatively or additionally, the electric drive system may comprise a location sensor being configured for detecting a location of the trailer. The rotational speed sensor and/or the location sensor is communicatively coupled to the data processing device. Using at least one of the rotational speed sensor and the location sensor, a velocity information may be provided in a simple and reliable manner.

It is noted that notwithstanding the differences between electric drive systems with permanent coupling to the wheels and temporary coupling to the wheels, of course, the electric drive system according to the present disclosure may also be used for maneuvering the trailer, e.g. for parking it in a narrow parking space. To this end, a remote control may be used. In such a case, of course the above-mentioned lower velocity limit needs to be ignored. To this end, an override functionality may be provided.

The present disclosure also relates to a computer program product comprising instructions which when the program is executed by a computer, cause the computer to carry out the method according to the present disclosure.

Furthermore, the present disclosure relates to a computer readable storage medium comprising instruction which, when executed by a computer, cause the computer to carry out the method according to the present disclosure.

It should be noted that the above examples may be combined with each other irrespective of the aspect involved. Accordingly, the method may be combined with structural features and, likewise, the data processing device and the electric drive system may be combined with features described above with regard to the method.

These and other aspects of the present disclosure will become apparent from and elucidated with reference to the examples described hereinafter.

Examples of the disclosure will be described in the following with reference to the following drawings.

- Figure 1: shows a trailer being connected to a towing vehicle, wherein the trailer comprises an electric drive system according to the present disclosure, the electric drive system comprises a data processing device according to the present disclosure being configured for carrying out a method according to the present disclosure
- Figure 2: shows the trailer of Figure 1 in a more detailed representation,
- Figure 3: illustrates steps of the method according to the present disclosure, and
- Figure 4: shows a graph describing a support torque as a function of a speed information.

The figures are merely schematic representations and serve only to illustrate examples of the disclosure. Identical or equivalent elements are in principle provided with the same reference signs.

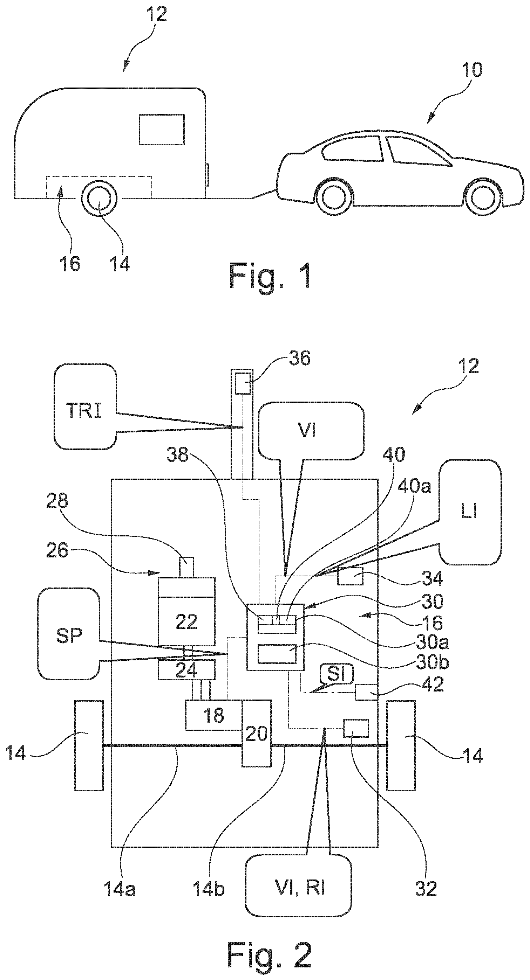

Figure 1 shows a towing vehicle 10 towing a trailer 12.

In the example shown in the Figures, the trailer 12 is a caravan.

Furthermore, in the present example, the trailer 12 comprises a single axle. Thus, the trailer has two wheels 14. These wheels 14 may also be called a pair of wheels 14.

The trailer 12 comprises an electric drive system 16 which is shown in more detail in Figure 2.

As can be directly seen from the Figure, the electric drive system 16 is permanently coupled to the wheels 14 via corresponding drive shafts 14a, 14b.

The electric drive system 16 comprises an electric machine 18 which is coupled to the drive shafts 14a, 14b of the wheels 14 via a gearing mechanism 20.

Thus, the electric machine 18 is configured to drive the wheels 14.

Moreover, the electric drive system 16 comprises a battery unit 22 and an inverter unit 24. The battery unit 22 is electrically connected to the electric machine 18 via the inverter unit 24.

The battery unit 22 provides electric energy for the operation of the electric machine 18.

For recharging the battery unit 22, a charging unit 26 is provided. The charging unit 26 comprises a charging interface 28. Electric energy can be fed to the battery unit 22 via the charging interface 28 of the charging unit 26.

The electric drive system 16 additionally comprises a data processing device 30.

The data processing device 30 is communicatively coupled to the electric machine 18.

The data processing device 30 is configured to control the operation of the electric machine 18.

In more detail, the data processing device 30 can request the electric machine 18 to provide a certain drive support power to the wheels 14 of the trailer 12.

Furthermore, the electric drive system 16 comprising a rotational speed sensor 32. The rotational speed sensor 32 is configured for detecting a rotational speed of one of the wheels 14.

The rotational speed sensor 32 is communicatively coupled to the data processing device 30.

The electric drive system 16 additionally comprises a location sensor 34.

Such a location sensor 34 may also be referred to as a GPS sensor.

The location sensor 34 is configured for detecting a location of the trailer 12.

Also the location sensor 34 is communicatively coupled to the data processing device 30.

It is noted that the electric drive system 16 does not necessarily need a rotational speed sensor 32 and a location sensor 34. One of these sensors is enough.

Moreover, the electric drive system comprises a towing hook sensor 36.

The towing hook sensor 36 is configured for detecting a towing force which is applied at the towing hook of the trailer 12 for towing.

Also the towing hook sensor 36 is communicatively connected to the data processing device 30.

The data processing device 30 comprises means for carrying out a method for controlling the electric drive system 16 of the trailer 12.

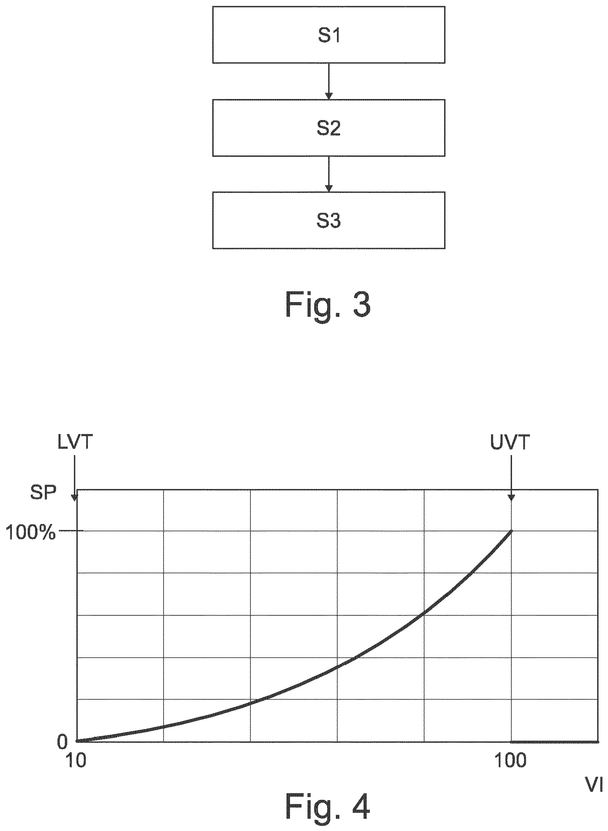

The steps of the method are illustrated in Figure 3.

In a first step S1, a velocity information VI is received at the data processing device 30. The velocity information VI describes a travelling velocity of the trailer 12, i.e. the velocity information VI directly or indirectly describes a velocity over ground.

In the present example, the velocity information VI can be a rotational speed information RI describing a rotational speed of the wheel 14. The rotational speed information RI is provided by the rotational speed sensor 32.

The data processing device 30 is configured for determining a velocity over ground of the trailer 12 based on the rotational speed information RI.

The data processing device comprises a data storage unit 30a and a data processing unit 30b. Both the data storage unit 30a and the data processing unit 30b are means for carrying out the method.

In order to calculate the velocity over ground based on the rotational speed information RI, an effective radius or diameter of the wheel 14 needs to be stored on the data storage unit 30a.

Alternatively or additionally, a location information LI being provided by the location sensor 34 can be used for the determination of the velocity over ground. The location information describes a location of the trailer 12. The location information LI may be provided in the form of a time series.

Based thereon, the data processing unit 30b may calculate a temporal differential of the location information LI. This temporal differential is the velocity over ground.

It is noted again, that one alternative for calculating the velocity over ground is sufficient for operating the trailer 12.

In a case as represented in Figure 2, where the electric drive system 16 comprises both a rotational speed sensor 32 and a location sensor 34 it is also possible to use both the ways for calculating the speed over ground as described above and determine a corresponding average value. In such a case the reliability of the calculated velocity over ground is enhanced.

In a second step S2 of the method, a drive support power SP is determined as a function of the received velocity information VI.

In this context, three velocity intervals have to be distinguished.

A first velocity interval ranges from zero to a defined lower velocity threshold LVT. The defined lower velocity threshold is for example 10 km/h (see also Figure 4).

Within the first velocity interval, the drive support power SP is zero.

This is done for safety reasons in order to avoid that the trailer 12 drives without being intentionally towed by the vehicle 10.

In other words, the determined drive support power SP is zero if the received velocity information VI describes a travelling velocity of the trailer 12 being inferior to the defined lower velocity threshold LVT.

A second velocity interval is located above an upper velocity threshold UVT (see also Figure 4).

Above the upper velocity threshold UVT, i.e. within the second velocity interval, the drive support power SP is also zero.

The upper velocity threshold UVT is for example chosen to correspond to a legal speed limit for a towing vehicle 10 towing a trailer 12.

The upper velocity limit may be 80 km/h or 100km/h. in the representation of Figure 4 it is 100km/h.

In other words, the determined drive support power SP is zero if the received velocity information VI describes a travelling velocity of the trailer 12 exceeding the defined upper velocity threshold UVT.

A third velocity interval ranges from the lower velocity threshold LVT to the upper velocity threshold UVT.

In this third velocity interval the determined drive support power SP usually exceeds zero.

Three alternatives of the second step S2 of the method have to be distinguished in this context.

In a first alternative, a look-up table 38 is stored on the data storage unit 30a of the data processing device 30.

The look-up table 38 comprises a number of velocity over ground values or a number of velocity over ground ranges and corresponding values for the drive support power SP.

Thus, for each velocity over ground, a corresponding drive support power SP may be determined using the look-up table 38.

According to a second alternative, a model 40 is stored on the data storage unit 30a of the data processing device 30.

The model 40 describes a relation between the velocity information VI and a corresponding drive support power SP.

Thus, when inputting a velocity information VI to the model 40, a corresponding drive support power SP may be received.

In the present alternative, the model 40 comprises a second order polynomial or a third order polynomial describing the drive support power SP as a function of the velocity information VI. Reference is made to the above explanations concerning second and third order polynomials.

As has already been explained, second and third order polynomials comprises coefficients which need to be determined in order to have a fully operational model 40.

There are essentially three different possibilities for determining the coefficients.

According to a first possibility, the coefficients are determined through theoretical calculations. These calculations may comprise establishing and or using equations describing the aerodynamics of a towing vehicle 10 and a trailer 12 and the resistance resulting from the wheel friction of the trailer 12. This possibility has already been explained above.

According to a second possibility, the coefficients may be determined by experiments which may be performed when designing the electric drive system 16 of the trailer 12. During these experiments, test drives may be performed at different velocities over ground. For each of these different velocities, a different amounts of drive support power SP may be used. As a result of the test drives, the most appropriate drive support power SP for the different velocities is determined respectively.

According to a third possibility, the coefficients are automatically determined during an initial phase of using the trailer 12.

To this end, a towing resistance information TRI provided by the towing hook sensor 36 may be used.

Moreover, a desired towing resistance value may be provided by the data storage unit 30a. The desired towing resistance may be pre-defined such that it is sufficiently big for allowing the towing vehicle 10 to effectively tow the trailer 12 thereby defining the moving speed and the moving direction of the trailer. If the effective towing resistance is too small, the control of the movement of the trailer 12 by the towing vehicle 10 cannot be guaranteed. Additionally, the desired towing resistance is sufficiently small such that the towing of the trailer 12 only has a minor effect on the driving range of the towing vehicle 10 as compared to the use of the towing vehicle 10 without a trailer 12.

Thus, during the initial phase of using the trailer 12, situations are detectable in which the towing resistance information TRI describes the desired towing resistance or is within a predefined tolerance range around the desired towing resistance. In such situations, additionally the drive support power SP and the velocity information VI are known.

Using a plurality of such situations, the coefficients can be determined e.g. by performing a curve fit. In other words, the model 40 is automatically calibrated based on the towing resistance information TRI.

In a third alternative, a set of different models is provided. In Figure 2, besides the model 40 only one exemplary additional model 40a is represented. However, it is obvious that the number of models 40, 40a comprised by the set is in principle unlimited. Each of the models 40, 40a describes a relation between the velocity information VI and a corresponding drive support power SP.

In the present alternative, each of the models 40, 40a comprises a second order polynomial or a third order polynomial describing the drive support power SP as a function of the velocity information VI. Reference is made to the above explanations.

In a first example of the third alternative, the model 40, 40a to be used for determining the drive support power SP may be chosen manually be a user. Thus, the user may select the model 40, 40a which he or she considers to be most appropriate.

In this context, the data processing device 30 uses a corresponding selection information SI which may be provided by a selection interface 42 of the electric drive system 16. The selected model is used for calculating the drive support power SP.

The selection interface is communicatively connected to the data processing device 30.

In this example, the model 40 may for example be specifically adapted for small towing vehicles. This means that the model 40 respects a comparatively large added frontal surface of the trailer 12 and the corresponding influence on the aerodynamics.

The model 40a may for example be specifically adapted for big towing vehicles. Thus, the model 40a may be configured such that the effects of a comparatively small added frontal surface of the trailer 12 and the corresponding effects on aerodynamics are incorporated.

In another example of the third alternative, again, a towing resistance information TRI may be received. As before, the towing resistance information TRI is provided by the towing hook sensor 36.

Using the towing resistance information TRI, the most appropriate model 40, 40a may be selected automatically.

To this end, substantially the same procedure is followed which has already been explained in connection with the calibration of the model 40.

However, instead of performing a curve fit for determining the coefficients the pairs of the velocity information VI and drive support power SP which have been determined in situation where the towing resistance information TRI describes the desired towing resistance are now used for finding the most accurate model 40, 40a.

To this end, the velocity information VI is used as an input for the different available models 40, 40a and the corresponding drive support power SP is calculated using the model 40, 40a. Subsequently, a difference is calculated between the drive support power SP which has been determined by the model 40, 40a and the drive support power SP which has been used when the towing resistance information TRI describes the desired towing resistance. Based thereon, the model 40, 40a offering the smallest differences, i.e. the smallest error, is chosen.

In a subsequent third step S3 of the method, the electric machine 18 is requested to provide the determined drive support power SP to the wheels 14 of the trailer 12.

A curve representing an exemplary drive support power SP as a function of the velocity information VI is represented in Figure 4. This curve is a representation of the model 40.

In Figure 4, the velocity information VI is represented as speed over ground in the unit km/h. The drive support power SP is represented as a percentage.

### LIST OF REFERENCE SIGNS

- 10: towing vehicle
- 12: trailer
- 14: wheel
- 14a: drive shaft
- 14b: drive shaft
- 16: electric drive system
- 18: electric machine
- 20: gearing mechanism
- 22: battery unit
- 24: inverter unit
- 26: charging unit
- 28: charging interface
- 30: data processing device
- 30a: data storage unit
- 30b: data processing unit
- 32: rotational speed sensor
- 34: location sensor
- 36: towing hook sensor
- 38: look-up table
- 40: model
- 40a: alternative model
- 42: selection interface

- LI: temporal differential of location information
- LVT: lower velocity threshold
- RI: rotational speed information
- S1: first step
- S2: second step
- S3: third step
- SI: selection information
- SP: drive support power
- TRI: towing resistance information
- UVT: upper velocity threshold
- VI: velocity information

## Claims

1. A method for controlling an electric drive system (16) of a trailer (12), wherein the electric drive system (16) comprises at least one electric machine (18) for driving at least one pair of wheels (14) of the trailer (12), the method comprising:
- receiving a velocity information (VI) describing a travelling velocity of the trailer (12) (S1),
- determining a drive support power (SP) as a function of the received velocity information (VI) (S2),
wherein determining a drive support power (SP) comprises using a model (40, 40a), wherein the model (40, 40a) describes a relation between the velocity information (VI) and a corresponding drive support power (SP), and
wherein the model (40, 40a) comprises a second order polynomial describing the drive support power (SP) as a function of the velocity information (VI) or a third order polynomial describing the drive support power (SP) as a function of the velocity information (VI),
- receiving a towing resistance information (TRI) and calibrating the model (40, 40a) based on the towing resistance information (TRI), and
- requesting the at least one electric machine (18) to provide the determined drive support power (SP) to the at least one pair of wheels (14) of the trailer (12).

2. The method of claim 1, wherein the velocity information (VI) is a rotational speed information (RI) describing a rotational speed of at least one wheel (14) of the trailer (12).

3. The method of claim 1, wherein the velocity information (VI) is a time series of location information (LI), wherein the location information describes a location of the trailer (12).

4. The method of any one of the preceding claims, wherein the determined drive support power (SP) is zero if the received velocity information (VI) describes a travelling velocity of the trailer (12) being smaller than a defined lower velocity threshold (LVT).

5. The method of any one of the preceding claims, wherein the determined drive support power (SP) is zero if the received velocity information describes a travelling velocity of the trailer (12) exceeding a defined upper velocity threshold (UVT).

6. The method of any one of the preceding claims, wherein determining the drive support power (SP) comprises using a look-up table (38).

7. The method of any one of the preceding claims, further comprising
- providing a set of different models (40, 40a),
- selecting one out of the set of different models (40, 40a), and
- determining the drive support power (SP) using the selected model (40, 40a).

8. The method of claim 7, further comprising receiving a selection information (SI) and selecting the model (40, 40a) corresponding to the selection information (SI).

9. The method of claim 7, further comprising receiving a towing resistance information (TRI) and selecting the one out of the set of different models (40, 40a) based on the towing resistance information (TRI).

10. A data processing device (30) comprising means for carrying out the method according to any one of the preceding claims

11. An electric drive system (16) for a trailer (12), comprising at least one electric machine (18) for driving at least one pair of wheels (14) of the trailer (12), and a data processing device (30) according to claim 10, wherein the data processing device (30) is communicatively coupled to the at least one electric machine (18) such that the data processing device (30) can request the at least one electric machine (18) to provide a drive support power (SP) to the at least one pair of wheels (14) of the trailer (12).

12. The electric drive system (16) of claim 11, further comprising a rotational speed sensor (32) being configured for detecting a rotational speed of at least one wheel (14) of the trailer (12) or a location sensor (34) being configured for detecting a location of the trailer (12), wherein the rotational speed sensor (32) or the location sensor (34) is communicatively coupled to the data processing device (30).

## Patentansprüche

1. Verfahren zum Steuern eines elektrischen Antriebssystems (16) eines Anhängers (12), wobei das elektrische Antriebssystem (16) mindestens eine elektrische Maschine (18) zum Antreiben mindestens eines Paares von Rädern (14) des Anhängers (12) umfasst, wobei das Verfahren Folgendes umfasst:
- Empfangen von Geschwindigkeitsinformationen (VI), die eine Fahrgeschwindigkeit des Anhängers (12) (S1) beschreiben,
- Bestimmen einer Antriebsunterstützungsleistung (SP) als eine Funktion der empfangenen Geschwindigkeitsinformationen (VI) (S2), wobei Bestimmen einer Antriebsunterstützungsleistung (SP) Verwenden eines Modells (40, 40a) umfasst, wobei das Modell (40, 40a) eine Beziehung zwischen den Geschwindigkeitsinformationen (VI) und einer entsprechenden Antriebsunterstützungsleistung (SP) beschreibt, und
wobei das Modell (40, 40a) ein Polynom zweiter Ordnung, das die Antriebsunterstützungsleistung (SP) als eine Funktion der Geschwindigkeitsinformationen (VI) beschreibt, oder ein Polynom dritter Ordnung, das die Antriebsunterstützungsleistung (SP) als eine Funktion der Geschwindigkeitsinformationen (VI) beschreibt, umfasst,
- Empfangen einer Zugwiderstandsinformation (TRI) und Kalibrieren des Modells (40, 40a) basierend auf der Zugwiderstandsinformation (TRI), und
- Auffordern der mindestens einen elektrischen Maschine (18), die bestimmte Antriebsunterstützungsleistung (SP) für das mindestens eine Paar Räder (14) des Anhängers (12) bereitzustellen.

2. Verfahren nach Anspruch 1, wobei die Geschwindigkeitsinformationen (VI) Drehzahlinformationen (RI) sind, die eine Drehzahl von mindestens einem Rad (14) des Anhängers (12) beschreiben.

3. Verfahren nach Anspruch 1, wobei die Geschwindigkeitsinformationen (VI) eine Zeitreihe von Ortsinformationen (LI) sind, wobei die Ortsinformationen einen Ort des Anhängers (12) beschreiben.

4. Verfahren nach einem der vorhergehenden Ansprüche, wobei die bestimmte Antriebsunterstützungsleistung (SP) null ist, wenn die empfangenen Geschwindigkeitsinformationen (VI) eine Fahrgeschwindigkeit des Anhängers (12) beschreiben, die kleiner als eine definierte untere Geschwindigkeitsschwelle (LVT) ist.

5. Verfahren nach einem der vorhergehenden Ansprüche, wobei die bestimmte Antriebsunterstützungsleistung (SP) null ist, wenn die empfangenen Geschwindigkeitsinformationen eine Fahrgeschwindigkeit des Anhängers (12) beschreiben, die eine definierte obere Geschwindigkeitsschwelle (UVT) überschreitet.

6. Verfahren nach einem der vorhergehenden Ansprüche, wobei das Bestimmen der Antriebsunterstützungsleistung (SP) das Verwenden einer Nachschlagetabelle (38) umfasst.

7. Verfahren nach einem der vorhergehenden Ansprüche, das ferner Folgendes umfasst:
- Bereitstellen eines Satzes verschiedener Modelle (40, 40a),
- Auswählen eines aus dem Satz verschiedener Modelle (40, 40a), und
- Bestimmen der Antriebsunterstützungsleistung (SP) unter Verwendung des ausgewählten Modells (40, 40a).

8. Verfahren nach Anspruch 7, ferner umfassend Empfangen von Auswahlinformationen (SI) und Auswählen des Modells (40, 40a), das den Auswahlinformationen (SI) entspricht.

9. Verfahren nach Anspruch 7, ferner umfassend Empfangen einer Zugwiderstandsinformation (TRI) und Auswählen des einen aus dem Satz verschiedener Modelle (40, 40a) basierend auf der Zugwiderstandsinformation (TRI).

10. Datenverarbeitungsvorrichtung (30), die Mittel zum Durchführen des Verfahrens nach einem der vorhergehenden Ansprüche umfasst.

11. Elektrisches Antriebssystem (16) für einen Anhänger (12), umfassend mindestens eine elektrische Maschine (18) zum Antreiben mindestens eines Paares von Rädern (14) des Anhängers (12), und eine Datenverarbeitungsvorrichtung (30) nach Anspruch 10, wobei die Datenverarbeitungsvorrichtung (30) kommunikativ mit der mindestens einen elektrischen Maschine (18) gekoppelt ist, so dass die Datenverarbeitungsvorrichtung (30) die mindestens eine elektrische Maschine (18) auffordern kann, dem mindestens einen Paar Räder (14) des Anhängers (12) eine Antriebsunterstützungsleistung (SP) bereitzustellen.

12. Elektrisches Antriebssystem (16) nach Anspruch 11, ferner umfassend einen Drehzahlsensor (32), der zum Detektieren einer Drehzahl von mindestens einem Rad (14) des Anhängers (12) ausgelegt ist, oder einen Positionssensor (34), der zum Detektieren eines Ortes des Anhängers (12) ausgelegt ist, wobei der Drehzahlsensor (32) oder der Positionssensor (34) kommunikativ mit der Datenverarbeitungsvorrichtung (30) gekoppelt ist.

## Revendications

1. Procédé de commande d'un système d'entraînement électrique (16) d'une remorque (12), dans lequel le système d'entraînement électrique (16) comprend au moins une machine électrique (18) pour entraîner au moins une paire de roues (14) de la remorque (12), le procédé comprenant :
- la réception d'informations de vitesse (VI) décrivant une vitesse de déplacement de la remorque (12) (S1),
- la détermination d'une puissance de support d'entraînement (SP) en fonction des informations de vitesse reçues (VI) (S2), dans lequel la détermination d'une puissance de support d'entraînement (SP) comprend l'utilisation d'un modèle (40, 40a), dans lequel le modèle (40, 40a) décrit une relation entre les informations de vitesse (VI) et une puissance de support d'entraînement correspondante (SP), et
dans lequel le modèle (40, 40a) comprend un polynôme de deuxième ordre décrivant la puissance de support d'entraînement (SP) en fonction des informations de vitesse (VI) ou un polynôme de troisième ordre décrivant la puissance de support d'entraînement (SP) en fonction des informations de vitesse (VI),
- la réception d'informations de résistance au remorquage (TRI) et l'étalonnage du modèle (40, 40a) sur la base des informations de résistance au remorquage (TRI), et
- la demande faite à la ou aux machines électriques (18) de fournir la puissance de support d'entraînement déterminée (SP) à la ou aux paires de roues (14) de la remorque (12).

2. Procédé selon la revendication 1, dans lequel les informations de vitesse (VI) sont des informations de vitesse de rotation (RI) décrivant une vitesse de rotation d'au moins une roue (14) de la remorque (12).

3. Procédé selon la revendication 1, dans lequel les informations de vitesse (VI) sont une série chronologique d'informations de position (LI), dans lequel les informations de localisation décrivent une position de la remorque (12).

4. Procédé selon l'une quelconque des revendications précédentes, dans lequel la puissance de support d'entraînement déterminée (SP) est nulle si les informations de vitesse reçues (VI) décrivent une vitesse de déplacement de la remorque (12) inférieure à un seuil de vitesse inférieur défini (LVT).

5. Procédé selon l'une quelconque des revendications précédentes, dans lequel la puissance de support d'entraînement déterminée (SP) est nulle si les informations de vitesse reçues décrivent une vitesse de déplacement de la remorque (12) dépassant un seuil de vitesse supérieur défini (UVT).

6. Procédé selon l'une quelconque des revendications précédentes, dans lequel la détermination de la puissance de support d'entraînement (SP) comprend l'utilisation d'une table de consultation (38).

7. Procédé selon l'une quelconque des revendications précédentes, comprenant en outre :
- la fourniture d'un ensemble de différents modèles (40, 40a),
- la sélection d'un modèle parmi l'ensemble de différents modèles (40, 40a), et
- la détermination de la puissance de support d'entraînement (SP) à l'aide du modèle sélectionné (40, 40a).

8. Procédé selon la revendication 7, comprenant en outre la réception d'informations de sélection (SI) et la sélection du modèle (40, 40a) correspondant aux informations de sélection (SI).

9. Procédé selon la revendication 7, comprenant en outre la réception d'informations de résistance au remorquage (TRI) et la sélection dudit modèle parmi l'ensemble de différents modèles (40, 40a) sur la base des informations de résistance au remorquage (TRI).

10. Appareil de traitement de données (30) comprenant des moyens pour mettre en œuvre le procédé selon l'une quelconque des revendications précédentes.

11. Système d'entraînement électrique (16) pour une remorque (12), comprenant au moins une machine électrique (18) pour entraîner au moins une paire de roues (14) de la remorque (12), et un dispositif de traitement de données (30) selon la revendication 10, dans lequel le dispositif de traitement de données (30) est couplé en communication à la ou aux machines électriques (18) de sorte que le dispositif de traitement de données (30) peut demander à la ou aux machines électriques (18) de fournir une puissance de support d'entraînement (SP) à la ou aux paires de roues (14) de la remorque (12).

12. Système d'entraînement électrique (16) selon la revendication 11, comprenant en outre un capteur de vitesse de rotation (32) configuré pour détecter une vitesse de rotation d'au moins une roue (14) de la remorque (12) ou un capteur de position (34) configuré pour détecter une position de la remorque (12), dans lequel le capteur de vitesse de rotation (32) ou le capteur de position (34) est couplé en communication au dispositif de traitement de données (30).
